# EUROPEAN PATENT SPECIFICATION

(11) **EP 2 896 829 B1**
(45) Date of publication and mention of the grant of the patent: **24.08.2016**
(21) Application number: 14151595.7
(22) Date of filing: 17.01.2014
(51) Int. Cl.: E04H 12/08, F03D 1/00, F03D 13/20

(54) **Tower segment device of a tower construction for a wind turbine**
Turmsegmentvorrichtung eines Turmaufbaus für eine Windenergieanlage
Dispositif de segment de tour d'une construction de tour pour turbine éolienne

(43) Date of publication of application: 22.07.2015
(73) Proprietor: Siemens Aktiengesellschaft, 80333 München (DE)
(72) Inventor: Eriksen, Uffe, 8700 Horsens (DK)

(56) References cited:
- EP-A1- 2 636 899
- DE-A1-102010 039 316
- US-A1- 2013 180 199

## Description

The invention relates to a tower segment device of a tower construction for a wind turbine.

It is known to segment respective tower constructions in, typically cylindrically shaped, tower segments. Respective tower segments are axially mounted on top of each other on an erection or installation site in order to build a tower construction of a wind turbine. Respective tower segments usually comprise a radially outwardly extending mounting flange for mounting the tower segments to a further component, particularly a foundation structure.

Due to the large dimensions, i.e. particularly diameters, of tower constructions of wind turbines and hence, respective tower segments, handling and particularly, transport is oftentimes cumbersome. Especially, problems may arise when respective tower segments have to be transported through tunnels, below bridges, or more generally said through or below passageways with limited height. US20130180199 A1 discloses a tower segment device according to the prior art.

It is the object of the invention to provide a tower segment device which is improved in regard of transportability. This object is inventively achieved by a tower segment device of a tower construction for a wind turbine, which includes:
- at least one tower segment provided with at least one radially outwardly extending mounting flange for mounting the tower segment to a further component, with the mounting flange having a defined outer diameter in the mounted state of the tower segment in which the tower segment is mounted to the further component, whereby
- the mounting flange comprises at least one portion of reduced outer diameter , with the portion of reduced outer diameter having an outer diameter which is reduced below the defined outer diameter of the mounting flange in the mounted state of the tower segment, and
- at least one mounting flange adapter element which is attachable or attached to the portion of reduced outer diameter in such a manner that the outer diameter of the mounting flange is radially elongated at least to the defined outer diameter.

The inventive tower segment device includes at least one tower segment. The tower segment is adapted to build a complete tower construction when mounted with a foundation structure and, if need be other tower segments. The tower segment is provided with at least one radially outwardly extending mounting flange for mounting the tower segment to a further component such as a foundation structure or a further tower segment. The mounting flange typically defines the maximum outer diameter of the tower segment.

The mounting flange has a defined outer diameter in the mounted state of the tower segment. The mounted state of the tower segment is defined in that the tower segment is mounted to a further component, particularly a foundation structure. The defined outer diameter of the mounting flange may be denoted as first outer diameter.

The mounting flange comprises at least one portion of reduced outer diameter. The reduced outer diameter of the mounting flange may be denoted as second outer diameter. The portion of reduced outer diameter has an outer diameter which is reduced below the defined outer diameter of the mounting flange in the mounted state of the tower segment. Hence, the mounting flange is provided with at least one portion whose radial dimensions are reduced compared with the radial dimensions of the mounting flange in the mounted state of the tower segment. The reduction of the outer diameter of the mounting flange may be perceived as a radial removal of material of a conventional mounting flange.

This implies that the reduction of the outer diameter of the mounting flange may in fact be realised by radially removing material of a conventional mounting flange. Of course, it is also possible that the mounting flange is originally built, i.e. manufactured with at least one respective portion of reduced outer diameter.

Regarding a mounting flange with a given outer circumference, a number of discrete or separate portions of reduced outer diameter may be provided along the outer circumference of the mounting flange. The discrete or separate portions of reduced outer diameter may be circumferentially uniformly distributed along the outer circumference of the mounting flange. The discrete or separate portions of reduced outer diameter each circumferentially extend along a certain circumferential distance of the outer circumference of the mounting flange.

The mounting flange may also be entirely reduced in outer diameter, i.e. the portion of reduced outer diameter may extend along the entire outer circumference of the mounting flange. In this case, the mounting flange is circumferentially entirely provided with a reduced outer diameter.

The at least one portion of reduced outer diameter gives rise to a reduction of the maximum outer diameter of the mounting flange and consequently, the tower segment. In such a manner, handling and particularly, transport of the tower segment is eased. Hence, problems with transporting the tower segment through tunnels, below bridges, or more generally said through or below passageways with limited height are solved.

As mentioned above, the tower segment has a defined outer diameter in the mounted state in which it is mounted to a further component. Hence, in order to mount the tower segment to a further component, the portion of reduced outer diameter has to be radially elongated in order to compensate the reduction of the outer diameter.

This is realised by the provision of a mounting flange adapter element. The mounting flange adapter element is attachable or (in the mounted state of the tower segment) attached to the portion of reduced outer diameter in such a manner that the outer diameter of the mounting flange is radially elongated at least to the defined outer diameter. Particularly, the mounting flange adapter element is attachable or (in the mounted state of the tower segment) attached to the portion of reduced outer diameter in such a manner that the mounting flange is radially elongated in the region of the portion of reduced outer diameter at least to the defined outer diameter.

Hence, when a respective mounting flange adapter element is attached to the portion of reduced outer diameter of the mounting flange, the reduction of outer diameter of the mounting flange is compensated since the mounting flange adapter element is dimensioned in such a manner that it at least equals the delta in outer diameter between the outer diameter of the portion of reduced outer diameter and the defined outer diameter of the mounting flange in the mounted state of the tower segment. Thus, by attaching a respective mounting flange adapter element to a respective portion of reduced outer diameter, the necessary outer diameter of the mounting flange for mounting the tower segment to a further component is obtained.

Attachment of the mounting flange adapter element to the portion of reduced outer diameter may be releasable or non-releasable. Generally, all kinds of attachment principles, i.e. force-fit- and/or form-fit- and/or material-fitconnections are feasible for attaching the mounting flange adapter element to a portion of reduced outer diameter.

Of course, a number of mounting flange adapter elements may be provided which may be adapted and/or allocated to at least one portion of reduced outer diameter. Generally, the adaption and/or allocation of at least one mounting flange adapter element to at least one portion of reduced outer diameter is in such a manner that attachment of the respective mounting flange adapter element to the respective portion of reduced outer diameter (re-)establishes the defined outer diameter of the mounting flange in the region of the portion of the reduced outer diameter.

According to an embodiment of the invention, the outer diameter of the portion of reduced outer diameter lies between the defined outer diameter of the mounting flange in the mounted state of the tower segment and the outer diameter of the tower segment. The outer diameter of the tower segment is defined by the outer diameter of a base body of the tower segment which does not include the mounting flange. Hence, reduction of the outer diameter of the mounting flange may be limited to the maximum outer diameter of the tower segment. A reduction of the outer diameter of the tower segment is therefore, not mandatorily necessary which ensures the mechanical stability of the tower segment device.

According to a further embodiment of the invention, the mounting flange is a ring-shaped component having a circular circumference when the mounting flange adapter element is attached to the portion of reduced outer diameter. Thereby, the portion of reduced outer diameter may be built as a chord extending between two circumferentially spaced points of the defined outer diameter of the mounting flange in the mounted state. This implies that portions of reduced outer diameter are straight and not curved, whereas all other portions along the outer circumference of the mounting flange are not straight, but curved.

In this embodiment, the ring-shape of the mounting flange is circumferentially at least partially interrupted by the portion of reduced outer diameter when there is no mounting flange adapter element attached to it. The shape of the mounting flange adapter element is accordingly adapted to compensate the "missing space" between the portion of reduced outer diameter and the theoretical or imaginary circular circumference of the mounting flange if there was no portion of reduced outer diameter and the mounting flange was symmetrically shaped. In order to complete the ring-shape of the mounting flange, the mounting flange adapter element may have an outer circumferential portion which is shaped as a segment of a circle, whereby the radius of the segment of a circle corresponds to the radius of the defined outer diameter of the mounting flange in the mounted state.

The ring-shape of the mounting flange is usually applied when the tower segment has a cylindrical shape. Of course, other geometrical shapes of both the mounting flange and the tower segment are generally feasible as well.

According to a further embodiment of the invention, the mounting flange adapter element has a U-shaped cross-section so as to take hold of the portion of reduced diameter when being attached to the mounting flange. In such a manner, a mechanically stable fit of a respective mounting flange adapter element to a respective portion of reduced outer diameter is feasible. Of course, a respective mounting flange adapter element may be provided with other cross-sectional shapes, e.g. an L-shape, as well.

According to the invention, both the mounting flange and the mounting flange adapter element are provided with at least one mounting site for mounting the tower segment with a corresponding mounting site of a further component. The mounting sites of the mounting flange and the mounting flange adapter element both serve for mounting and securing the tower segment to a further component such as particularly, a foundation structure or a further tower segment.

Thereby, the mounting flange and the mounting flange adapter element are provided with mounting site sections, particularly mounting site halves, adapted to build a mounting site when the mounting flange adapter element is attached to the mounting flange. Hence, a mounting site of the mounting flange and the mounting flange adapter element may at least partially be divided in respective mounting site sections, particularly mounting site halves, which have to be connected in order to complete respective mounting sites. Connection of respective corresponding mounting site sections in order to build a complete mounting site is typically achieved when the mounting flange adapter element is attached to the mounting flange.

A respective mounting site may be a bore or may comprise a bore. The bores may be through-bores. The bores have to be penetrated by bolts or the like for mounting the tower segment to a respective further component.

The invention further relates to a method for assembling a tower segment device as specified above. The method comprises the steps of:
- providing at least one tower segment provided with at least one radially outwardly extending mounting flange for mounting the tower segment to a further component, particularly a foundation structure or a further tower segment, with the mounting flange having a defined outer diameter in the mounted state of the tower segment in which the tower segment is mounted to a further component, particularly a foundation structure or a further tower segment, whereby the mounting flange comprises at least one portion of reduced outer diameter, with the portion of reduced outer diameter having an outer diameter which is reduced below the defined outer diameter of the mounting flange in the mounted state of the tower segment, and
- attaching at least one mounting flange adapter element to the portion of reduced outer diameter in such a manner that the outer diameter of the mounting flange is radially elongated, particularly in the region of the portion of reduced outer diameter, at least to the defined outer diameter.

Assembling of the tower segment device is particularly useful in regard of installation of a wind turbine, requiring mounting the tower segment to further components, i.e. foundation structure or further tower segments.

Furthermore, the invention relates to a method for disassembling a tower segment device as specified above. The method comprises the steps of:
- providing at least one tower segment provided with at least one radially outwardly extending mounting flange for mounting the tower segment to a further component, particularly a foundation structure or a further tower segment, with the mounting flange having a defined outer diameter in the mounted state of the tower segment in which the tower segment is mounted to a further component, particularly a foundation structure or a further tower segment, whereby the mounting flange comprises at least one portion of reduced outer diameter, with the portion of reduced outer diameter having an outer diameter which is reduced below the defined outer diameter of the mounting flange in the mounted state of the tower segment, whereby at least one mounting flange adapter element is attached to the portion of reduced outer diameter in such a manner that the outer diameter of the mounting flange is radially elongated, particularly in the region of the portion of reduced outer diameter, at least to the defined outer diameter, and
- detaching the mounting flange adapter element from the mounting flange.

Disassembling of the tower segment device is particularly useful in regard of handling and particularly, transportation since the maximum outer diameter of the tower segment may be reduced by detaching the mounting flange adapter element from the mounting flange, i.e. the portion of reduced outer diameter.

Regarding both the inventive method for assembling a respective tower segment device and the inventive method for disassembling a respective tower segment device, all annotations concerning the inventive tower segment device apply mutatis mutandis.

Specific embodiments of the invention will be described in detail herein below with reference to the figures, wherein:
- fig. 1: shows a perspective view of a tower segment device according to an exemplary embodiment of the invention;
- fig. 2: shows an enlarged view of the detail II shown in fig. 1 with mounting flange adapter element;
- fig. 3: shows an enlarged view of the detail II shown in fig. 1 without mounting flange adapter element; and
- fig. 4: shows a principle axial view of a tower segment device according to a further exemplary embodiment of the invention.

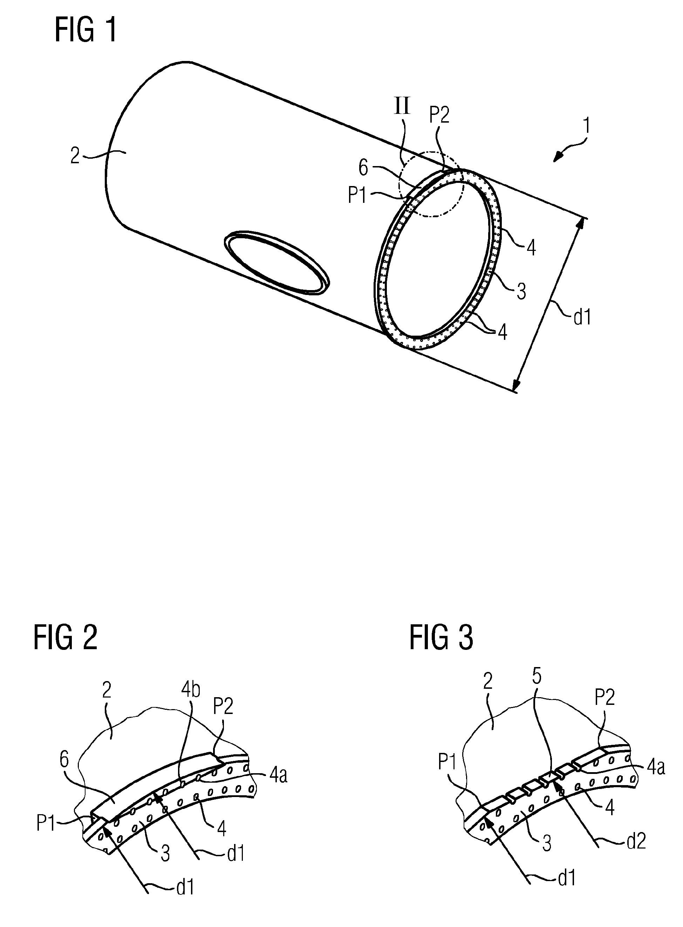

Fig. 1 shows a perspective view of a tower segment device 1 according to an exemplary embodiment of the invention. The tower segment device 1 is part of a tower construction of a wind turbine.

The tower segment device 1 comprises a tower segment 2 having a hollow cylindrical base body. The tower segment 2 is to be mounted to a foundation structure on an erection or installation site of a wind turbine.

Due to its hollow cylindrical geometry, the tower segment 2 may house diverse functional and/or structural components of the wind turbine such as electrical equipment, i.e. electrical power converters, electrical transformers, etc., for instance.

An axial end of the tower segment 2 is provided with a radially outwardly extending mounting flange 3. The mounting flange 3 has as a ring-like geometry/shape and is firmly attached to the base body of the tower segment, e.g. by welding. Of course, the tower segment 2 may be provided with further mounting flanges 3 which further mounting flanges 3 are disposed at different axial positions with reference to the symmetrical axis of the tower segment 2.

The mounting flange 3 depicted in the fig. serves for mounting the tower segment 2 to a foundation structure. Therefore, the mounting flange 3 is provided with numerous mounting sites 4 in the shape of bores, particularly through-bores. The bores are penetrated by bolts for mounting the tower segment 2 to a foundation structure. Respective mounting sites 4 are circumferentially distributed along the mounting flange 3.

The mounting flange 3 has a defined outer diameter d1 in the mounted state of the tower segment 2 in which the tower segment 2 is mounted to a further component such as the mentioned foundation structure. The defined outer diameter d1 of the mounting flange 3 may be denoted as first outer diameter.

As is discernible from fig. 3, the mounting flange 3 comprises a portion 5 of reduced outer diameter d2. The outer diameter d2 of the portion 5 of reduced outer diameter d2 is reduced below the defined outer diameter d1. Particularly, the outer diameter d2 of the portion 5 of reduced outer diameter d2 lies between the defined outer diameter d1 of the mounting flange 3 and the outer diameter of the tower segment 2. The reduced outer diameter d2 of the mounting flange 3 may be denoted as second outer diameter.

Of course, the tower segment 2 may comprise a number of respective portions 5 of reduced outer diameter d2. Preferably, respective portions 5 of reduced outer diameter d2 are located at opposite circumferential positions.

A portion 5 of reduced outer diameter d2 obviously gives rise to a reduction of the maximum outer diameter of the mounting flange 3 and consequently, the maximum outer diameter of the tower segment 2. In such a manner, handling and particularly, transport of the tower segment 2 is eased. Hence, problems with transporting the tower segment 2 through tunnels, below bridges, or more generally said through or below passageways with limited height is solved.

As is further discernible from fig. 3, the portion 5 of reduced outer diameter d2 is built as a chord extending between two circumferentially spaced points P1, P2 of the circular outer diameter of the mounting flange 3, i.e. particularly the defined outer diameter d1 of the mounting flange 3 in the mounted state. Therefore, the portion 5 of reduced outer diameter d2 may be deemed as a geometric line segment whose endpoints both lie on the circular outer diameter of the mounting flange 3.

As is further discernible from fig. 3, the portion 5 of reduced outer diameter d2 is partly provided with mounting site sections 4a, i.e. mounting site halves, as a consequence of the reduction of the outer diameter of the mounting flange 3.

Particularly referring to fig. 1, 2, a bracket-like mounting flange adapter element 6 is provided as a further component or member of the tower segment device 1. The mounting flange adapter element 6 is (attachable or) firmly attached to the portion 5 of reduced outer diameter d2 in such a manner that the outer diameter of the mounting flange 3 is radially elongated to the defined outer diameter d1 of the mounting flange 3 in the mounted state of the tower segment 2. Radial elongation of the outer diameter of the mounting flange 3 is provided in the region of the portion of reduced outer diameter d2.

Hence, when the mounting flange adapter element 6 is attached to the portion 5 of reduced outer diameter d2, the reduction of the outer diameter of the mounting flange 3 is compensated since the mounting flange adapter element 6 is dimensioned in such a manner that it equals the delta in outer diameter between the reduced outer diameter d2 of the portion 5 of reduced outer diameter d2 and the defined outer diameter d1 of the mounting flange 3 in the mounted state of the tower segment 2. Thus, by attaching the mounting flange adapter element 6 to the portion 5 of reduced outer diameter d2, the necessary outer diameter d1 of the mounting flange 3 for mounting the tower segment 2 to a further component such as the mentioned foundation structure is obtained.

Attachment of the mounting flange adapter element 6 to the portion 5 of reduced outer diameter d2 may be releasable or non-releasable. Generally, all kinds of attachment principles, i.e. force-fit- and/or form-fit- and/or material-fit-connections are feasible for attaching the mounting flange adapter element 6 to the portion 5 of reduced outer diameter d2.

As is particularly discernible from fig. 2, the mounting flange adapter element 6 is a component having a U-shaped cross-section. In such a manner, the mounting flange adapter element 6 can take hold of the portion 5 of reduced diameter d2 when being attached to the mounting flange 3.

The mounting flange adapter element 6 has an outer circumferential portion which is shaped as a segment of a circle. Thereby, the radius of the segment of a circle of the outer circumferential portion of the mounting flange adapter element 6 corresponds to the radius of the defined outer diameter d1 of the mounting flange 3 in the mounted state so as to realise a smooth circumferential transition from the mounting flange 3 to the mounting flange adapter element 6. Hence, the mounting flange 3 is a ring-shaped component having a circular circumference when the mounting flange adapter element 6 is attached to the portion 5 of reduced outer diameter d2 (cf. fig. 1).

Fig. 2 also shows that the mounting flange adapter element 6 is provided with respective mounting site sections 4b corresponding to the mounting site sections 4a provided with the mounting flange 3 so as to build a mounting site 4 when the mounting flange adapter element 6 is attached to the mounting flange 3.

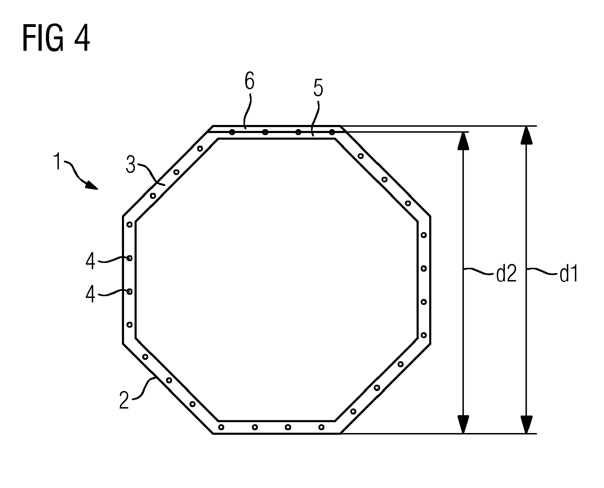

Fig. 4 shows a principle axial view of a tower segment device 1 according to a further exemplary embodiment of the invention. On basis of the exemplary embodiment depicted in fig. 4, it may be set forth that the inventive principle is not limited to tower segments 2 having a circular circumference, but may also be applied to tower segments 2 with polygonal circumferences.

In the exemplary embodiment depicted in fig. 4, the mounting flange 3 has the geometry of an octagon. In order to match the geometry of the mounting flange 3, the shape of the mounting flange adapter element 6 accords to the shape of a trapezoid.

The tower segment device 1 as depicted in the fig. allows the implementation of a method for assembling a tower segment device 1 and a method for disassembling a tower segment device 1.

The method for assembling a tower segment device 1 comprises the steps of:
- providing at least one tower segment 2 provided with at least one radially outwardly extending mounting flange 3 for mounting the tower segment 2 to a further component, particularly a foundation structure or a further tower segment, with the mounting flange 3 having a defined outer diameter d1 in the mounted state of the tower segment 2 in which the tower segment 2 is mounted to a further component, particularly a foundation structure or a further tower segment, whereby the mounting flange 3 comprises at least one portion 5 of reduced outer diameter d2, with the portion 5 of reduced outer diameter d2 having an outer diameter d2 which is reduced below the defined outer diameter d1 of the mounting flange 3 in the mounted state of the tower segment 2, and
- attaching at least one mounting flange adapter element 6 to the portion 5 of reduced outer diameter d2 in such a manner that the outer diameter of the mounting flange 3 is radially elongated, particularly in the region of the portion 5 of reduced outer diameter d2, at least to the defined outer diameter d1.

Assembling of the tower segment device 1 is particularly useful in regard of erection or installation of a wind turbine, requiring mounting the tower segment 2 to further components, i.e. a foundation structure or a further tower segment, for instance.

The method for disassembling a tower segment device 1 comprises the steps of:
- providing at least one tower segment 2 provided with at least one radially outwardly extending mounting flange 3 for mounting the tower segment 2 to a further component, particularly a foundation structure or a further tower segment, with the mounting flange 3 having a defined outer diameter d1 in the mounted state of the tower segment 2 in which the tower segment 2 is mounted to a further component, particularly a foundation structure or a further tower segment, whereby the mounting flange 3 comprises at least one portion 5 of reduced outer diameter d2, with the portion 5 of reduced outer diameter d2 having an outer diameter d2 which is reduced below the defined outer diameter d1 of the mounting flange 3 in the mounted state of the tower segment 2, whereby at least one mounting flange adapter element 6 is attached to the portion 5 of reduced outer diameter d2 in such a manner that the outer diameter of the mounting flange 3 is radially elongated, particularly in the region of the portion 5 of reduced outer diameter d2, at least to the defined outer diameter d1, and
- detaching the mounting flange adapter element 6 from the mounting flange 3.

Disassembling of the tower segment device 1 is particularly useful in regard of handling and particularly, transportation since the maximum outer diameter of the mounting flange 3 and the tower segment 2, respectively may be reduced by detaching the mounting flange adapter element 6 from the mounting flange 3, i.e. the portion 5 of reduced outer diameter d2.

Although the present invention has been described in detail with reference to the preferred embodiment, the present invention is not limited by the disclosed examples from which the skilled person is able to derive other variations without departing from the scope of the invention.

## Claims

1. Tower segment device (1) of a tower construction for a wind turbine, comprising:
- at least one tower segment (2) provided with at least one radially outwardly extending mounting flange (3) for mounting the tower segment (2) to a further component, with the mounting flange (3) having a defined outer diameter (d1) in the mounted state of the tower segment (2) in which the tower segment (2) is mounted to the further component, whereby
- the mounting flange (3) comprises at least one portion (5) of reduced outer diameter (d2), with the portion (5) of reduced outer diameter (d2) having an outer diameter (d2) which is reduced below the defined outer diameter (d1) of the mounting flange (3) in the mounted state of the tower segment (2), and
- at least one mounting flange adapter element (6) which is attachable or attached to the portion (5) of reduced outer diameter (d2) in such a manner that the outer diameter of the mounting flange (3) is radially elongated at least to the defined outer diameter (d1),
wherein both the mounting flange (3) and the mounting flange adapter element (6) are provided with at least one mounting site (4) for mounting the tower segment (2) with a corresponding mounting site of a further component,
**characterised in that** the mounting flange (3) and the mounting flange adapter element (6) are provided with mounting site sections (4a, 4b), adapted to build a mounting site (4) when the mounting flange adapter element (6) is attached to the mounting flange (3).

2. Tower segment device according to claim 1, wherein the outer diameter (d2) of the portion (5) of reduced outer diameter (d2) lies between the defined outer diameter (d1) of the mounting flange (3) and the outer diameter of the tower segment (2).

3. Tower segment device according to claim 1 or 2, wherein the mounting flange (3) is a ring-shaped component having a circular circumference when the mounting flange adapter element (6) is attached to the portion (5) of reduced outer diameter (d2).

4. Tower segment device according to claim 3, wherein the portion (5) of reduced outer diameter (d2) is built as a chord extending between two circumferentially spaced points (P1, P2) of the defined outer diameter (d1).

5. Tower segment device according to claim 3 or 4, wherein the mounting flange adapter element (6) has an outer circumferential portion which is shaped as a segment of a circle, whereby the radius of the segment of a circle corresponds to the radius of the defined outer diameter (d1) .

6. Tower segment device according to one of the preceding claims, wherein the mounting flange adapter element (6) has a U-shaped cross-section so as to take hold of the portion (5) of reduced diameter (d2) when being attached to the mounting flange (3).

7. Tower segment device according to one of the preceding claims, wherein a mounting site (4) is a bore or comprises a bore.

8. Tower segment device according to one of the preceding claims, wherein the further component is a foundation structure or a further tower segment.

9. Method for assembling a tower segment device (1) according to one of the preceding claims, comprising the steps of:
- providing at least one tower segment (2) provided with at least one radially outwardly extending mounting flange (3) for mounting the tower segment (2) to a further component, particularly a foundation structure or a further tower segment, with the mounting flange (3) having a defined outer diameter (d1) in the mounted state of the tower segment (2) in which the tower segment (2) is mounted to a further component, particularly a foundation structure or a further tower segment, whereby the mounting flange (3) comprises at least one portion (5) of reduced outer diameter (d2), with the portion (5) of reduced outer diameter (d2) having an outer diameter (d2) which is reduced below the defined outer diameter (d1) of the mounting flange (3) in the mounted state of the tower segment (2), and
- attaching at least one mounting flange adapter element (6) to the portion (5) of reduced outer diameter (d2) in such a manner that the outer diameter of the mounting flange (3) is radially elongated, particularly in the region of the portion (5) of reduced outer diameter (d2), at least to the defined outer diameter (d1).

10. Method for disassembling a tower segment device (1) according to one of the claims 1- 10, comprising the steps of:
- providing at least one tower segment (2) provided with at least one radially outwardly extending mounting flange (3) for mounting the tower segment (2) to a further component, particularly a foundation structure or a further tower segment, with the mounting flange (3) having a defined outer diameter (d1) in the mounted state of the tower segment (2) in which the tower segment (2) is mounted to a further component, particularly a foundation structure or a further tower segment, whereby the mounting flange (3) comprises at least one portion (5) of reduced outer diameter (d2), with the portion (5) of reduced outer diameter (d2) having an outer diameter (d2) which is reduced below the defined outer diameter (d1) of the mounting flange (3) in the mounted state of the tower segment (2), whereby at least one mounting flange adapter element (6) is attached to the portion (5) of reduced outer diameter (d2) in such a manner that the outer diameter of the mounting flange (3) is radially elongated, particularly in the region of the portion (5) of reduced outer diameter (d2), at least to the defined outer diameter (d1), and
- detaching the mounting flange adapter element (6) from the mounting flange (3).

## Patentansprüche

1. Turmsegmentvorrichtung (1) eines Turmaufbaus für eine Windenergieanlage mit:
- mindestens einem Turmsegment (2), das mit mindestens einem radial nach außen verlaufenden Befestigungsflansch (3) zum Befestigen des Turmsegments (2) an einer weiteren Komponente versehen ist, wobei der Befestigungsflansch (3) im befestigten Zustand des Turmsegments (2), in dem dieses an der weiteren Komponente befestigt ist, einen bestimmten Außendurchmesser (d1) aufweist, wobei
- der Befestigungsflansch (3) mindestens einen Abschnitt (5) mit verringertem Außendurchmesser (d2) umfasst, welcher einen Außendurchmesser (d2) aufweist, der geringer ist als der bestimmte Außendurchmesser (d1) des Befestigungsflansches (3) im befestigten Zustand des Turmsegments (2), und
- mindestens einem Befestigungsflanschadapterelement (6), das auf eine solche Weise an dem Abschnitt (5) mit verringertem Außendurchmesser (d2) anbringbar oder angebracht ist, dass sich der Außendurchmesser des Befestigungsflansches (3) radial zumindest auf den bestimmten Außendurchmesser (d1) verlängert,
wobei sowohl der Befestigungsflansch (3) als auch das Befestigungsflanschadapterelement (6) mit mindestens einer Befestigungsstelle (4) zum Befestigen des Turmsegments (2) an einer entsprechenden Befestigungsstelle einer weiteren Komponente versehen ist,
**dadurch gekennzeichnet, dass** der Befestigungsflansch (3) und das Befestigungsflanschadapterelement (6) mit Befestigungsstellenteilen (4a, 4b) versehen sind, die so ausgelegt sind, dass eine Befestigungsstelle (4) entsteht, wenn das Befestigungsflanschadapterelement (6) an dem Befestigungsflansch (3) angebracht ist.

2. Turmsegmentvorrichtung nach Anspruch 1, bei der der Außendurchmesser (d2) des Abschnitts (5) mit verringertem Außendurchmesser (d2) zwischen dem bestimmten Außendurchmesser (d1) des Befestigungsflansches (3) und dem Außendurchmesser des Turmsegments (2) liegt.

3. Turmsegmentvorrichtung nach Anspruch 1 oder 2, bei der es sich bei dem Befestigungsflansch (3) um eine ringförmige Komponente mit einem kreisförmigen Umfang handelt, wenn das Befestigungsflanschadapterelement (6) an dem Abschnitt (5) mit verringertem Außendurchmesser (d2) angebracht ist.

4. Turmsegmentvorrichtung nach Anspruch 3, bei der der Abschnitt (5) mit verringertem Außendurchmesser (d2) als Sehne ausgelegt ist, die zwischen zwei in Umfangsrichtung beabstandeten Punkten (P1, P2) an dem bestimmten Außendurchmesser (d1) verläuft.

5. Turmsegmentvorrichtung nach Anspruch 3 oder 4, bei der das Befestigungsflanschadapterelement (6) einen Außenumfangsabschnitt aufweist, der als ein Kreissegment geformt ist, wobei der Radius des Kreissegments dem Radius des bestimmten Außendurchmessers (d1) entspricht.

6. Turmsegmentvorrichtung nach einem der vorhergehenden Ansprüche, bei der das Befestigungsflanschadapterelement (6) einen U-förmigen Querschnitt aufweist, so dass es den Abschnitt (5) mit verringertem Durchmesser (d2) erfasst, wenn er an dem Befestigungsflansch (3) angebracht wird.

7. Turmsegmentvorrichtung nach einem der vorhergehenden Ansprüche, bei der eine Befestigungsstelle (4) eine Bohrung ist oder umfasst.

8. Turmsegmentvorrichtung nach einem der vorhergehenden Ansprüche, bei der die weitere Komponente eine Fundamentkonstruktion oder ein weiteres Turmsegment ist.

9. Verfahren zum Montieren einer Turmsegmentvorrichtung (1) nach einem der vorhergehenden Ansprüche, das folgende Schritte umfasst:
- Bereitstellen mindestens eines Turmsegments (2), das mit mindestens einem radial nach außen verlaufenden Befestigungsflansch (3) zum Befestigen des Turmsegments (2) an einer weiteren Komponente, insbesondere einer Fundamentkonstruktion oder einem weiteren Turmsegment, versehen ist, wobei der Befestigungsflansch (3) im befestigten Zustand des Turmsegments (2), in dem das Turmsegment (2) an einer weiteren Komponente, insbesondere einer Fundamentkonstruktion oder einem weiteren Turmsegment, befestigt ist, einen bestimmten Außendurchmesser (d1) aufweist, wobei der Befestigungsflansch (3) mindestens einen Abschnitt (5) mit verringertem Außendurchmesser (d2) umfasst, welcher einen Außendurchmesser (d2) aufweist, der geringer ist als der bestimmte Außendurchmesser (d1) des Befestigungsflansches (3) im befestigten Zustand des Turmsegments (2), und
- Anbringen mindestens eines Befestigungsflanschadapterelements (6) an dem Abschnitt (5) mit verringertem Außendurchmesser (d2) auf eine solche Weise, dass sich der Außendurchmesser des Befestigungsflansches (3) insbesondere in dem Bereich des Abschnitts (5) mit verringertem Außendurchmesser (d2) radial zumindest auf den bestimmten Außendurchmesser (d1) verlängert.

10. Verfahren zum Demontieren einer Turmsegmentvorrichtung
(1) nach einem der Ansprüche 1 bis 10, das folgende Schritte umfasst:
- Bereitstellen mindestens eines Turmsegments (2), das mit mindestens einem radial nach außen verlaufenden Befestigungsflansch (3) zum Befestigen des Turmsegments (2) an einer weiteren Komponente, insbesondere einer Fundamentkonstruktion oder einem weiteren Turmsegment, versehen ist, wobei der Befestigungsflansch (3) im befestigten Zustand des Turmsegments (2), in dem das Turmsegment (2) an einer weiteren Komponente, insbesondere einer Fundamentkonstruktion oder einem weiteren Turmsegment, befestigt ist, einen bestimmten Außendurchmesser (d1) aufweist, wobei der Befestigungsflansch (3) mindestens einen Abschnitt (5) mit verringertem Außendurchmesser (d2) umfasst, welcher einen Außendurchmesser (d2) aufweist, der geringer ist als der bestimmte Außendurchmesser (d1) des Befestigungsflansches (3) im befestigten Zustand des Turmsegments (2), wobei mindestens ein Befestigungsflanschadapterelement (6) auf eine solche Weise an dem Abschnitt (5) mit verringertem Außendurchmesser (d2) angebracht ist, dass sich der Außendurchmesser des Befestigungsflansches (3) insbesondere in dem Bereich des Abschnitts (5) mit verringertem Außendurchmesser (d2) radial zumindest auf den bestimmten Außendurchmesser (d1) verlängert, und
- Abnehmen des Befestigungsflanschadapterelements (6) von dem Befestigungsflansch (3).

## Revendications

1. Dispositif (1) de segment de tour d'une construction de tour pour une éolienne, comprenant :
- au moins un segment (2) de tour prévu avec au moins un rebord (3) de montage s'étendant radialement vers l'extérieur pour monter le segment (2) de tour sur un autre composant, avec le rebord (3) de montage ayant un diamètre extérieur (d1) défini dans l'état monté du segment (2) de tour dans lequel le segment (2) de tour est monté sur l'autre composant, dans lequel
- le rebord (3) de montage comprend au moins une partie (5) de diamètre extérieur (d2) réduit, avec la partie (5) de diamètre extérieur (d2) réduit ayant un diamètre extérieur (d2) qui est réduit en-dessous du diamètre extérieur (d1) défini du rebord (3) de montage dans l'état monté du segment (2) de tour, et
- au moins un élément (6) adaptateur de rebord de montage qui peut être fixé ou est fixé à la partie (5) de diamètre extérieur (d2) réduit de telle manière que le diamètre extérieur du rebord (3) de montage est radialement allongé au moins jusqu'au diamètre extérieur (d1) défini,
dans lequel le rebord (3) de montage et l'élément (6) adaptateur de rebord de montage sont tous les deux prévus avec au moins un site (4) de montage pour monter le segment (2) de tour avec un site de montage correspondant d'un autre composant,
**caractérisé en ce que** le rebord (3) de montage et l'élément (6) adaptateur de rebord de montage sont prévus avec des sections (4a, 4b) de site de montage adaptées à construire un site (4) de montage lorsque l'élément (6) adaptateur de rebord de montage est fixé au rebord (3) de montage.

2. Dispositif de segment de tour selon la revendication 1, dans lequel le diamètre extérieur (d2) de la partie (5) de diamètre extérieur (d2) réduit se trouve entre le diamètre extérieur (d1) défini du rebord (3) de montage et le diamètre extérieur du segment (2) de tour.

3. Dispositif de segment de tour selon la revendication 1 ou 2, dans lequel le rebord (3) de montage est un composant en forme d'anneau ayant une circonférence circulaire lorsque l'élément (6) adaptateur de rebord de montage est fixé à la partie (5) de diamètre extérieur (d2) réduit.

4. Dispositif de segment de tour selon la revendication 3, dans lequel la partie (5) de diamètre extérieur (d2) réduit est construite comme une corde s'étendant entre deux points (P1, P2) circonférentiellement espacés du diamètre extérieur (d1) défini.

5. Dispositif de segment de tour selon la revendication 3 ou 4, dans lequel l'élément (6) adaptateur de rebord de montage a une partie circonférentielle extérieure qui est formée comme un segment d'un cercle, dans lequel le rayon du segment d'un cercle correspond au rayon du diamètre extérieur (d1) défini.

6. Dispositif de segment de tour selon l'une des revendications précédentes, dans lequel l'élément (6) adaptateur de rebord de montage a une section transversale en forme de U de façon à maintenir la partie (5) de diamètre (d2) réduit lorsqu'il est fixé au rebord (3) de montage.

7. Dispositif de segment de tour selon l'une des revendications précédentes, dans lequel un site (4) de montage est un alésage ou comprend un alésage.

8. Dispositif de segment de tour selon l'une des revendications précédentes, dans lequel l'autre composant est une structure de fondations ou un autre segment de tour.

9. Procédé d'assemblage d'un dispositif (1) de segment de tour selon l'une des revendications précédentes, comprenant les étapes de :
- prévision d'au moins un segment (2) de tour prévu avec au moins un rebord (3) de montage s'étendant radialement vers l'extérieur pour monter le segment (2) de tour sur un autre composant, particulièrement une structure de fondations ou un autre segment de tour, avec le rebord (3) de montage ayant un diamètre extérieur (d1) défini dans l'état monté du segment (2) de tour dans lequel le segment (2) de tour est monté sur un autre composant, particulièrement une structure de fondations ou un autre segment de tour, dans lequel le rebord (3) de montage comprend au moins une partie (5) de diamètre extérieur (d2) réduit, avec la partie (5) de diamètre extérieur (d2) réduit ayant un diamètre extérieur (d2) qui est réduit en-dessous du diamètre extérieur (d1) défini du rebord (3) de montage dans l'état monté du segment (2) de tour, et
- fixation d'au moins un élément (6) adaptateur de rebord de montage à la partie (5) de diamètre extérieur (d2) réduit de telle manière que le diamètre extérieur du rebord (3) de montage est radialement allongé, particulièrement dans la région de la partie (5) de diamètre extérieur (d2) réduit, au moins jusqu'au diamètre extérieur (d1) défini.

10. Procédé de désassemblage d'un dispositif (1) de segment de tour selon l'une des revendications 1-10, comprenant les étapes de :
- prévision d'au moins un segment (2) de tour prévu avec au moins un rebord (3) de montage s'étendant radialement vers l'extérieur pour monter le segment (2) de tour sur un autre composant, particulièrement une structure de fondations ou un autre segment de tour, avec le rebord (3) de montage ayant un diamètre extérieur (d1) défini dans l'état monté du segment (2) de tour dans lequel le segment (2) de tour est monté sur un autre composant, particulièrement une structure de fondations ou un autre segment de tour, dans lequel le rebord (3) de montage comprend au moins une partie (5) de diamètre extérieur (d2) réduit, avec la partie (5) de diamètre extérieur (d2) réduit ayant un diamètre extérieur (d2) qui est réduit en-dessous du diamètre extérieur (d1) défini du rebord (3) de montage dans l'état monté du segment (2) de tour, dans lequel au moins un élément (6) adaptateur de rebord de montage est fixé à la partie (5) de diamètre extérieur (d2) réduit de telle manière que le diamètre extérieur du rebord (3) de montage est radialement allongé, particulièrement dans la région de la partie (5) de diamètre extérieur (d2) réduit, au moins jusqu'au diamètre extérieur (d1) défini, et
- démontage de l'élément (6) adaptateur de rebord de montage du rebord (3) de montage.
